(19) **Europäisches Patentamt / European Patent Office / Office européen des brevets**

(11) **EP 2 889 783 B1**

(12) **FASCICULE DE BREVET EUROPEEN**

(45) Date de publication et mention de la délivrance du brevet:
**17.06.2020 Bulletin 2020/25**

(51) Int Cl.:
*G06F 17/18* (2006.01)      *G06K 9/62* (2006.01)
*H04L 29/06* (2006.01)

(21) Numéro de dépôt: **14200529.7**

(22) Date de dépôt: **30.12.2014**

(54) **Procédé de classification non supervisée d'une pluralité d'objets et le dispositif pour la classification non supervisée associé à ce procédé**

Nicht überwachtes Klassifizierungsverfahren einer Vielzahl von Objekten, und Vorrichtung für die nicht überwachte Klassifizierung nach diesem Verfahren

Method for unsupervised classification of a plurality of objects and device for unsupervised classification associated with said method

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.12.2013 FR 1303123**

(43) Date de publication de la demande:
**01.07.2015 Bulletin 2015/27**

(73) Titulaire: **Thales**
**92200 Neuilly Sur Seine (FR)**

(72) Inventeur: **Nogues, Damien**
**92622 GENNEVILLIERS (FR)**

(74) Mandataire: **Lavoix**
**2, place d'Estienne d'Orves**
**75441 Paris Cedex 09 (FR)**

(56) Documents cités:
**TW-A- 201 337 607**

- **KARLTON SEQUEIRA ET AL: "ADMIT: Anomalybased Data Mining for Intrusions", PROCEEDINGS OF THE EIGHTH ACM SIGKDD INTERNATIONAL CONFERENCE ON KNOWLEDGE DISCOVERY AND DATA MINING , KDD '02, 23 juillet 2002 (2002-07-23), page 386, XP055150490, New York, New York, USA DOI: 10.1145/775094.775103 ISBN: 978-1-58-113567-1**

- **LI HAN ET AL: "Using an improved clustering method to detect anomaly activities", WUHAN UNIVERSITY JOURNAL OF NATURAL SCIENCES, vol. 11, no. 6, 1 novembre 2006 (2006-11-01), pages 1814-1818, XP055150472, ISSN: 1007-1202, DOI: 10.1007/BF02831882**

- **WEI XIAOTAO ET AL: "Network Anomaly Detection Based on Semi-supervised Clustering", 7TH WSEAS INTERNATIONAL CONFERENCE ON SIMULATION, MODELLING AND OPTIMIZATION, 15 septembre 2007 (2007-09-15), pages 439-442, XP055149886, Beijing, China**

- **RON BEKKERMAN ET AL: "Multi-way distributional clustering via pairwise interactions", PROCEEDINGS OF THE 22ND INTERNATIONAL CONFERENCE ON MACHINE LEARNING , ICML '05, 7 août 2005 (2005-08-07), pages 41-48, XP055150509, New York, New York, USA DOI: 10.1145/1102351.1102357 ISBN: 978-1-59-593180-1**

- **RUI FA ET AL: "Smart: Novel self splitting-merging clustering algorithm", SIGNAL PROCESSING CONFERENCE (EUSIPCO), 2012 PROCEEDINGS OF THE 20TH EUROPEAN, IEEE, 27 août 2012 (2012-08-27), pages 2198-2202, XP032254355, ISBN: 978-1-4673-1068-0**

- **ALEC PAWLING ET AL: "Anomaly detection in a mobile communication network", COMPUTATIONAL & MATHEMATICAL ORGANIZATION THEORY, KLUWER ACADEMIC PUBLISHERS, BO, vol. 13, no. 4, 27 septembre 2007 (2007-09-27), pages 407-422, XP019550058, ISSN: 1572-9346, DOI: 10.1007/S10588-007-9018-7**
- **JOHNSON P C WOODLAND S E: "SPEAKER CLUSTERING USING DIRECT MAXIMISATION OF THE MLLR-ADAPTED LIKELIHOOD", 19981001, 1 octobre 1998 (1998-10-01), page P726, XP007000524,**
- **RANGA R VATSAVAI ET AL: "GX-Means: A model-based divide and merge algorithm for geospatial image clustering", PROCEDIA COMPUTER SCIENCE, vol. 4, 14 mai 2011 (2011-05-14), pages 186-195, XP028269529, ISSN: 1877-0509, DOI: 10.1016/J.PROCS.2011.04.020 [extrait le 2011-05-14]**
- **X DONG ET AL: "Similarity Search for Web Services", PROCEEDINGS 2004 VLDB CONFERENCE, 31 août 2004 (2004-08-31), pages 372-383, XP055148410, DOI: 10.1016/B978-012088469-8/50035-8 ISBN: 978-0-12-088469-8**

**Description**

La présente invention concerne un procédé de détermination d'événements anormaux dans un réseau informatique, pour détecter des intrusions dans des flux du réseau informatique, en utilisant un procédé de classification non supervisée d'une pluralité d'objets techniques constituant chacun un événement dans le réseau informatique, pour obtenir une partition de ces objets en une pluralité de classes permettant d'analyser ces objets, chaque objet technique étant décrit par une variable quantitative ou par une variable qualitative, la qualité de la partition obtenue étant décrite par un indicateur de qualité de cette partition,
le procédé comportant une étape initiale comprenant :

- la création d'un ensemble de classes à séparer comportant une ou plusieurs classes complémentaires composées de tous les objets techniques, et d'un ensemble vide de classes insécables ; et
- le calcul d'un indicateur courant de qualité correspondant à l'indicateur de qualité de la partition obtenue.

De tels procédés de classification sont utilisés dans de nombreux domaines techniques comme par exemple le domaine d'apprentissage non-supervisé, le domaine de cyber sécurité, le domaine de détection de fraude par exemple concernant l'utilisation de la carte bancaire (hors portée de l'invention) ou tout autre domaine exploitant un grand nombre de données. Ces procédés de classification sont connus généralement sous le terme anglais « clustering ».

De manière générale, les procédés de classification permettent d'analyser une base de données comportant des objets et de regrouper ces objets selon un ou plusieurs critères de ressemblance.

Ces objets sont également appelés «les individus » dans l'état de la technique et la base de données dont ils font partie, est appelée « la population ».

Chaque objet ou individu est décrit par une pluralité de variables permettant de le distinguer parmi d'autres objets. Il est courant d'utiliser deux types différents de telles variables.

Un premier type de variables correspond aux variables qualitatives représentant une caractéristique ou une qualité de chaque objet.

Ainsi, selon un exemple hors portée de l'invention, dans le domaine de détection de fraude à la carte bancaire, chaque objet représentant une carte bancaire, peut être décrit par une variable qualitative indiquant le numéro de la carte bancaire associée, ou bien l'identifiant du commerçant ayant effectué la dernière transaction avec cette carte, ou encore le type de bien acheté par cette transaction.

Dans le domaine de cyber sécurité, les variables qualitatives décrivant par exemple un poste connecté à un réseau informatique, sont représentées par exemple par l'adresse IP de ce poste, le protocole utilisé pour un flux de réseau ou encore un identificateur d'un paquet de données.

Un deuxième type de variables correspond aux variables quantitatives représentant une quantité ou une mesure numérique liée à chaque objet.

Dans le précédent exemple avec les cartes bancaires, une variable quantitative représente par exemple la valeur d'une transaction bancaire ou un nombre de transactions sur les dernières 24 heures effectuées par une carte donnée.

En cyber sécurité, une telle variable quantitative représente par exemple la taille d'un paquet, une durée de connexion, un nombre de tentatives d'accès d'un utilisateur.

Parfois, un troisième type de variables correspondant aux variables binaires, est utilisé. Toutefois, ce type de variables peut être considéré comme un cas particulier de variables qualitatives.

Le partitionnement d'une base de données ou d'une population permet d'obtenir une partition d'objets ou d'individus dans une pluralité de classes de manière que des objets ou des individus d'une même classe se ressemblent plus que des objets ou des individus de classes différentes.

Une telle ressemblance est souvent déterminée par une fonction de similarité de chaque couple d'objets ou d'individus définie pour une variable de chaque type.

Il existe également des techniques qui n'utilisent pas de fonction de qualité mais uniquement des distances entre individus. Ainsi, la technique « K-means » est un exemple classique de technique de classification qui n'utilise pas le concept de qualité mais la distance euclidienne.

De son côté, chaque partition obtenue est caractérisée par la qualité de cette partition. Cette qualité est décrite par exemple par un indicateur de qualité qui est d'autant plus grand que la qualité de la partition est élevée.

Finalement, les procédés de classification non supervisée permettent de déterminer une partition de manière automatique satisfaisant à un ou plusieurs critères de classification prédéterminés.

Le partitionnement obtenu est utilisé par exemple pour détecter des anomalies dans la base de données initiale. Plus particulièrement, la détection d'anomalies se base sur une première hypothèse selon laquelle les objets « normaux » sont fortement majoritaires dans la base de données initiale, et sur une deuxième selon laquelle les objets « anormaux » sont différents des objets « normaux ». La « normalité » d'objets est décrite donc par la taille de la classe contenant cet objet.

Différents procédés de classification non-supervisée existent déjà dans l'état de la technique.

Ainsi, par exemple, le procédé de classification non supervisée décrit dans le document WO 2007/068741 A1 permet de déterminer une partition d'un grand nombre d'objets décrits par une pluralité de variables quantitatives dans des temps raisonnables sans avoir nécessité de fixer le nombre de classes de cette partition a priori.

Cependant ce procédé comporte un certain nombre d'inconvénients. En particulier, pour les variables qualitatives ce procédé effectue une discrétisation ou un échantillonnage ce qui mène à une perte d'information.

D'autres procédés existants dans l'état de la technique mènent souvent à des complexités de calcul trop élevées (quadratique en nombre d'objets par exemple) ou à une impossibilité de traiter simultanément les variables quantitatives et qualitatives ou à une nécessité de fixer a priori le nombre de classes dans la partition finale.

On connait également le document Karlton Sequiera et al « ADMIT : Anomaly-based Data Mining for Intrusions » permettant d'obtenir une partition des objets en une pluralité de classes.

La présente invention a pour but de remédier aux inconvénients cités ci-dessus.

A cet effet, l'invention a pour objet un procédé de classification non supervisée d'une pluralité d'objets constituant chacun un événement dans un réseau informatique, pour déterminer des événements anormaux et par conséquent détecter des intrusions dans des flux du réseau informatique, caractérisé en ce qu'il comprend les étapes suivantes :

- la séparation d'une classe sélectionnée dans l'ensemble de classes à séparer en deux classes intermédiaires et le calcul d'un indicateur suivant de qualité correspondant à l'indicateur de qualité de la partition obtenue ;
- si l'indicateur suivant de qualité est supérieur à l'indicateur courant de qualité, l'ajout des deux classes intermédiaires dans l'ensemble de classes à séparer ;
- dans le cas contraire :

  + pour chaque classe de l'ensemble de classes à séparer, le calcul de l'indicateur de qualité d'une partition obtenue après une fusion de cette classe avec la classe sélectionnée ;
  + le calcul d'un indicateur maximal parmi tous les indicateurs de qualité calculés ;
  + si l'indicateur maximal de qualité est supérieur à l'indicateur courant de qualité, l'ajout de la classe fusionnée correspondant à cet indicateur maximal de qualité, dans l'ensemble de classes à séparer ;
  + dans le cas contraire, l'ajout de la classe sélectionnée dans l'ensemble de classes insécables.

Suivant d'autres aspects avantageux de l'invention, le procédé de classification non-supervisée d'une pluralité d'objets, comprend une ou plusieurs des caractéristiques suivantes, prises isolément ou suivant toutes les combinaisons techniquement possibles :

- l'étape de séparation d'une classe en deux classes intermédiaires comprend les sous-étapes suivantes :

  • l'affectation de chaque objet de la classe à séparer à une première classe intermédiaire ou à une deuxième classe intermédiaire et le calcul d'un indicateur local courant de qualité correspondant à l'indicateur de qualité de la partition obtenue ;
  • pour chaque objet de la première classe intermédiaire, le calcul d'une valeur de transfert correspondant à la différence entre l'indicateur de qualité d'une partition obtenue après un transfert de cet objet vers la deuxième classe intermédiaire, et l'indicateur local courant de qualité ;
  • le calcul d'une valeur de transfert maximale parmi toutes les valeurs de transfert obtenues et l'initialisation d'un seuil de transfert, le seuil de transfert étant proportionnel à la valeur de transfert ;
  • tant que la valeur de transfert est supérieure à zéro :

    + la sélection d'un des objets correspondant à la valeur de transfert maximale et le transfert de tous les objets de la même classe intermédiaire que l'objet sélectionné et les valeurs de transfert supérieures ou égales au seuil de transfert, vers l'autre classes intermédiaires ;
    + le calcul d'un indicateur local suivant de qualité correspondant à l'indicateur de qualité de la partition obtenue ;
    + l'actualisation de la valeur de transfert maximale et de l'indicateur local courant de qualité par l'indicateur local suivant de qualité ;

- le seuil de transfert est diminué si l'indicateur local suivant de qualité est supérieur à l'indicateur local courant de qualité ; et le seuil de transfert est augmenté dans le cas contraire ;
- l'indicateur de qualité d'une partition donnée dépend de chaque fonction de similarité de chaque couple d'objets définie pour chaque variable quantitative ou qualitative ;

- la fonction de similarité d'un couple d'objets formé d'un premier objet et d'un deuxième objet, pour une variable qualitative, est une fonction d'un nombre d'objets sur lesquelles cette variable qualitative prend une même valeur qui est égale à la valeur de cette variable qualitative sur le premier objet ;
- la fonction de similarité d'un couple d'objets formé d'un premier objet et d'un deuxième objet, pour une variable quantitative, est une fonction d'un nombre d'objets sur lesquelles cette variable quantitative prend une valeur comprise dans un intervalle défini par des valeurs correspondant aux valeurs que prend cette variable quantitative sur le premier objet et sur le deuxième objet ;
- le procédé comprend en outre une étape de recherche d'anomalies dans chaque partition obtenue, consistant à associer un niveau d'anormalité pour chaque classe de la partition obtenue, des anomalies étant contenues dans chaque classe avec un niveau d'anormalité supérieur à un seuil d'anormalité prédéterminé ;
- le niveau d'anormalité est déterminé pour chaque classe à l'aide d'une fonction de dissimilarité globale de chaque couple d'objets déterminant la dissemblance de ces objets indépendamment des variables $v_k$ ;
- les objets techniques sont des évènements dans un réseau informatique.

L'invention a également pour objet un produit programme d'ordinateur comportant des instructions logicielles qui, lorsque mis en œuvre par un équipement informatique, met en œuvre un procédé tel que défini ci-dessus.

L'invention a également pour objet un dispositif pour la classification non supervisée d'une pluralité d'objets techniques pour obtenir une partition de ces objets en une pluralité de classes permettant d'analyser ces objets, chaque objet technique étant décrit par une variable quantitative ou par une variable qualitative, la qualité de la partition obtenue étant décrite par un indicateur de qualité de cette partition,
le dispositif étant caractérisé en ce qu'il comporte des moyens de traitement aptes à :

- créer un ensemble de classes à séparer comportant une ou plusieurs classes complémentaires composées de tous les objets techniques, et un ensemble vide de classes insécables ; et
- calculer un indicateur courant de qualité correspondant à l'indicateur de qualité de la partition obtenue ;
- séparer une classe sélectionnée dans l'ensemble de classes à séparer en deux classes intermédiaires et calculer un indicateur suivant de qualité correspondant à l'indicateur de qualité de la partition obtenue ;
- si l'indicateur suivant de qualité est supérieur à l'indicateur courant de qualité, ajouter les deux classes intermédiaires dans l'ensemble de classes à séparer ;
- dans le cas contraire :

    + pour chaque classe de l'ensemble de classes à séparer, calculer l'indicateur de qualité d'une partition obtenue après une fusion de cette classe avec la classe sélectionnée ;
    + calculer un indicateur maximal parmi tous les indicateurs de qualité calculés ;
    + si l'indicateur maximal de qualité est supérieur à l'indicateur courant de qualité, ajouter la classe fusionnée correspondant à cet indicateur maximal de qualité, dans l'ensemble de classes à séparer ;
    + dans le cas contraire, ajouter la classe sélectionnée dans l'ensemble de classes insécables.

Ces caractéristiques et avantages de l'invention apparaîtront à la lecture de la description qui va suivre, donnée uniquement à titre d'exemple non limitatif, et faite en référence aux dessins annexés, sur lesquels :

- la figure 1 est une vue schématique du dispositif pour la classification non supervisée selon l'invention ;
- la figure 2 est un organigramme d'un procédé de classification non supervisée selon l'invention ;
- la figure 3 est un organigramme d'une étape de séparation faisant partie du procédé de la figure 2 ; et
- la figure 4 est un graphe illustrant le temps de calcul du procédé de la figure 2 pour des nombres différents de données d'entrée.

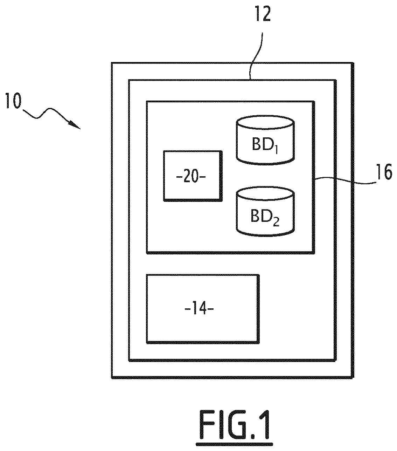

Un dispositif 10 pour la classification non supervisée est illustré sur la figure 1. Le dispositif 10 comporte une unité 12 de traitement de données formée par exemple d'un processeur 14 et d'une mémoire 16 associée à ce processeur 14.

Le processeur 14 est apte à exécuter une pluralité de logiciels que la mémoire 16 est apte à stocker.

En variante, le dispositif 10 comporte une pluralité de processeurs 14 permettant d'exécuter plusieurs logiciels ou des parties différentes d'un même logiciel en parallèle.

Ainsi, la mémoire 16 est apte à stocker un logiciel 20 de classification non supervisée mettant un œuvre un procédé 100 de classification non supervisée selon l'invention.

Le dispositif 10 est par exemple un ordinateur ou un calculateur comportant une pluralité de processeurs et connecté à un réseau informatique. Le logiciel de classification 20 est utilisé par exemple dans le domaine de cyber sécurité et permet de détecter des intrusions dans des flux du réseau informatique.

Pour ceci, le logiciel 20 est relié à des moyens de détection d'événements du réseau informatique. Le logiciel 20 est alors apte à obtenir une partition de ces évènements et à analyser la partition obtenue afin de déterminer des évènements anormaux.

La détermination des évènements anormaux permet ainsi de détecter des intrusions dans des flux du réseau informatique.

Plus particulièrement, le logiciel de classification non supervisée 20 est relié à une première base de données $BD_1$ et à une deuxième base de données $BD_2$. Les deux bases de données $BD_1$ et $BD_2$ sont stockées dans la mémoire 16.

En variante, au moins l'une des bases de données $BD_1$ ou $BD_2$ est stockée hors du dispositif 10 dans un serveur relié au dispositif 10 via le réseau informatique.

La première base de données $BD_1$ comporte un ensemble $\mathbb{O}$ composé de *N* objets $o_i$, c'est-à-dire :

$$\mathbb{O} = \{o_1, o_2, \dots, o_N\}.$$

Chaque objet $o_i$ désigne par exemple un évènement du réseau informatique fourni par les moyens de détection d'événements. Chaque évènement correspond par exemple à toute action effectuée par un utilisateur ou un logiciel du réseau informatique et ayant un impact sur le fonctionnement de ce réseau informatique.

Plus particulièrement, ces évènements sont fournis par exemple par un fichier « logs de firewalls » mémorisant des évènements comme : la connexion d'un utilisateur à un ordinateur donné, la durée ou la fréquence de cette connexion supérieure à un seuil prédéterminé, la taille totale de paquets échangés supérieure à un seuil prédéterminé ou bien d'autres.

Ainsi, par exemple, chaque objet $o_i$ est représenté dans la base de données $BD_1$ sous la forme d'un identifiant unique numérique ou alphanumérique relatif à l'événement correspondant. Cet identifiant permet ainsi de distinguer chaque objet $o_i$ ou évènement de façon unique et certaine.

La première base de données $BD_1$ comporte en autre un ensemble $\mathbb{V}$ composé de *M* variables $v_k$, c'est-à-dire :

$$\mathbb{V} = \{v_1, v_2, \dots, v_M\}.$$

Chaque variable $v_k$ permet de décrire chaque objet $o_i$ en associant à cet objet $o_i$ une valeur of .

Plus précisément, une variable $v_k$ qualitative permet de décrire un évènement en associant à l'objet $o_i$ correspondant une caractéristique ou une qualité.

Ainsi, par exemple, pour un ensemble $\mathbb{O}$ composé de cinq événements, une variable qualitative $v_1$ indiquant le protocole utilisé lors d'une transmission de données via le réseau informatique, prend l'une de ces trois valeurs : « TCP », « UDP » et « ICMP ». Pour des raisons de commodité de représentation, une valeur numérique est associée à chacune de ces valeurs, à savoir « 1 » pour « TCP », « 2 » pour « UDP » et « 3 » pour « ICMP ».

En outre, une variable $v_i$ quantitative permet de décrire un objet $o_i$ en représentant une quantité ou une mesure numérique liée à l'événement correspondant.

Dans l'exemple présenté ci-dessus, une variable quantitative $v_2$ indiquant la taille d'un paquet de données transmis mesurée en Ko prend une valeur comprise par exemple entre « 100 » et « 200 ».

Cette correspondance entre l'ensemble d'objets $\mathbb{O}$ et l'ensemble de variables $\mathbb{O}$ est stockée dans la première base de données $BD_1$ sous la forme d'une table $\mathbb{T}$ comportant *N* lignes et M colonnes.

Ainsi, une cellule de la table $\mathbb{T}$ correspondant à une ligne avec le numéro *i* et à une colonne avec le numéro *k* comporte une valeur $o_i^k$ que prend la variable $v_k$ sur l'objet $o_i$.

Un exemple d'une telle table $\mathbb{T}$ pour un ensemble d'objets $\mathbb{O}$ composé de cinq objets $o_i$ et l'ensemble de variables $\mathbb{V}$ composé de trois variables $v_k$ est illustré ci-dessous :

|       | $v_1$    | $v_2$              | $v_3$              |
|-------|----------|--------------------|--------------------|
| $o_1$ | $o_1^1$  | $\overline{o_1^2}$ | $\overline{o_1^3}$ |

(suite)

|  | $v_1$ | $v_2$ | $v_3$ |
|---|---|---|---|
| $o_2$ | $o_2^1$ | $o_2^2$ | $\overline{o_2^3}$ |
| $o_3$ | $\overline{o_3^1}$ | $o_3^2$ | $\overline{o_3^3}$ |
| $o_4$ | $\overline{o_4^1}$ | $\overline{o_4^2}$ | $o_4^3$ |
| $o_5$ | $\overline{o_5^1}$ | $o_5^2$ | $\overline{o_5^3}$ |

Dans cette table, la variable $v_1$ est par exemple une variable qualitative et les variables $v_2$ et $v_3$ sont par exemple des variables quantitative.

La deuxième base de données $BD_2$ comporte une partition *Par* d'objets $o_i$ en *P* classes différents, c'est-à-dire :

$$Par = \{C_1, C_2, ..., C_P\}$$

où le symbole $C_l$ désigne une classe d'objets $o_i$.

Chaque partition *Par* est apte à être déterminée par le procédé de classification non supervisée 100 selon un critère de classification prédéterminé de façon que deux objets $(o_i; o_j)$ quelconques pris dans une même classe $C_l$ se ressemblent plus que deux objets $(o_i; o_j)$ quelconques pris dans deux classes différentes. Le critère de classification ainsi que la notion de ressemblance sont détaillés plus tard dans la description.

Chaque partition *Par* est stockée dans la deuxième base de données $BD_2$ sous la forme d'une liste de classes obtenues $\{C_1, C_2, ..., C_P\}$ où chaque classe $C_l$ est stockée sous la forme d'une liste d'identifiants des évènements correspondant aux objets $o_i$ de cette classe $C_l$.

La ressemblance de deux objets $(o_i; o_j)$ quelconques est déterminée à l'aide d'une matrice $C^k$ de ressemblance locale de taille $N \times N$ définie pour une variable $v_k$ avec un terme général $C_{ij}^k$. Ce terme général $C_{ij}^k$ prend une valeur « 1 » si la variable $v_k$ prend une même valeur sur les deux objets $(o_i; o_j)$, et une valeur « 0 » dans le cas contraire, c'est-à-dire :

$$C_{ij}^k = \begin{cases} 1 & si\ o_i^k = o_j^k \\ 0 & sinon \end{cases}$$

Une matrice C de ressemblance globale permet de caractériser la ressemblance de deux objets $(o_i; o_j)$ quelconques sur l'ensemble de variables $\mathbb{V}$. Une telle matrice *C* est définie par la relation suivante :

$$C = \sum_{k=1}^{M} C^k.$$

Ainsi, la matrice de ressemblance globale *C* montre le nombre de variables $v_k$ pour lesquelles deux objets donnés partagent une même valeur.

La ressemblance de deux objets $(o_i; o_j)$ quelconques sur une variable $v_k$ est définie par une fonction $S_{ij}^k$ de similarité de ce couple d'objets. À son tour, cette fonction de similarité $S_{ij}^k$ est définie différemment pour une variable $v_k$ qualitative et pour une variable $v_k$ quantitative.

La dissemblance de deux objets $(o_i; o_j)$ quelconques sur une variable $v_k$ est définie par une fonction de dissimilarité $\overline{S}_{ij}^{k}$ complémentaire à la fonction de similarité $S_{ij}^{k}$.

La fonction de dissimilarité $\overline{S}_{ij}^{k}$ est définie par la relation suivante :

$$\overline{S}_{ij}^{k} = \frac{S_{ii}^{k} + S_{jj}^{k}}{2} - S_{ij}^{k}.$$

Pour une variable $v_k$ qualitative, la fonction de similarité $S_{ij}^{k}$ d'un couple d'objets ($o_i;o_j$) est définie par la relation suivante :

$$S_{ij}^{k} = \begin{cases} 1 - \dfrac{C_{i*}^{k}}{N} & si \ o_i^k = o_j^k \\ 0 & sinon \end{cases}$$

où $C_{i*}^{k}$ est définie par la relation

$$C_{i*}^{k} = \sum_{j=1}^{N} C_{ij}^{k}$$

et signifie le nombre d'objets sur lesquelles cette variable qualitative $v_k$ prend une même valeur qui est égale à la valeur $o_i^k$ de cette variable qualitative sur l'objet $o_i$.

Pour une variable $v_k$ quantitative, la fonction de similarité $S_{ij}^{k}$ d'un couple d'objets ($o_i;o_j$) est définie par la relation suivante :

$$S_{ij}^{k} = 1 - \frac{N_{ij}^{k}}{N}$$

où $N_{ij}^{k}$ signifie un nombre d'objets sur lesquelles cette variable quantitative $v_k$ prend une valeur comprise dans un intervalle $Int_{ij}^{k}$ dont les bornes sont définies par les valeurs $o_i^k$ et $o_j^k$. Autrement dit, $N_{ij}^{k}$ est la cardinalité de l'ensemble suivant :

$$Int_{ij}^{k} = \{o \in \mathbb{O} | \left(o_i^k \le o^k \le o_j^k\right) \vee \left(o_j^k \le o^k \le o_i^k\right)\},$$

où le symbole ∨ signifie la disjonction logique de deux propositions.

Finalement, la ressemblance de deux objets ($o_i; o_j$) quelconques indépendamment des variables $v_k$ est définie par une fonction $S_{ij}$ de similarité globale de ce couple d'objets. Cette fonction de similarité globale $S_{ij}$ est définie par la relation suivante :

$$S_{ij} = \sum_{k=1}^{M} S_{ij}^{k} .$$

De manière analogue, une fonction de dissimilarité globale déterminant la dissemblance de deux objets ($o_i$; $o_j$) quelconques indépendamment des variables $v_k$, est définie par la relation suivante :

$$\overline{S}_{ij} = \sum_{k=1}^{M} \overline{S}_{ij}^{k} \ .$$

Il est également possible d'utiliser autres types d'expressions pour les fonctions de similarité $S_{ij}^{k}$, de dissimilarité $\overline{S}_{ij}^{k}$, de similarité globale $S_{ij}$ et/ou de dissimilarité globale $\overline{S}_{ij}$.

Le critère de classification est basé sur la fonction de similarité globale $S_{ij}$ et consiste à trouver une partition $Par = \{C_1, C_2, ..., C_P\}$ de façon à maximiser l'expression suivante :

$$\sum_{C_l \in Par} \left[ \sum_{o_i, o_j \in C_l} S_{ij} - (1 - \alpha)|C_l| \sum_{o_i \in C_l} S_{ii} \right]$$

où $|C_l|$ désigne le nombre d'objets dans la classe $C_l$.

Cette expression définit un indicateur $I$ de qualité de la partition $Par$. La qualité de la partition $Par$ est alors définie par la valeur numérique de cet indicateur $I$ et est d'autant plus élevée que cette valeur est grande.

Afin d'accélérer le calcul de l'indicateur de qualité $I$, les expressions

$$\sum_{o_i, o_j \in C_l} S_{ij} \quad et \quad \sum_{o_i \in C_l} S_{ii}$$

faisant partie de l'expression (6) sont aptes à être calculées séparément pour des variables qualitatives et pour des variables quantitatives.

Ainsi, pour les variables qualitatives, ces expressions prennent les formes suivantes :

$$\sum_{o_i, o_j \in C_l} S_{ij} = \sum_{1 \leq k \leq P} C_l(v_k)^2 \left( 1 - \frac{\mathbb{O}(v_k)}{N} \right)$$

$$\sum_{o_i \in C_l} S_{ii} = \sum_{1 \leq k \leq P} C_l(v_k) \left( 1 - \frac{\mathbb{O}(v_k)}{N} \right)$$

où $C_l(v_k)$ désigne le nombre d'objets dans la classe $C_l$ ayant la même valeur dans la variable $v_k$ et

$$\mathbb{O}(v_k)$$

désigne le nombre d'objets dans l'ensemble d'objets $\mathbb{O}$ ayant la même valeur dans la variable $v_k$.

Pour les variables quantitatives, ces expressions prennent les formes suivantes :

$$\sum_{o_i, o_j \in C_l} S_{ij} = \sum_{o_i \in C_l} S_{ii} = |C_l|^2 - \frac{2}{N} \sum_{1 \leq p \leq |C_l|} |C_l|p + |C_l| - p^2 - 1$$

Ainsi, l'indicateur *I* est apte à être calculé en un temps proportionnel au nombre d'objets *N,* c'est-à-dire en *O*(*N*).

Le fonctionnement du logiciel de classification 20 mis en œuvre par le procédé de classification non supervisée 100 va désormais être expliqué.

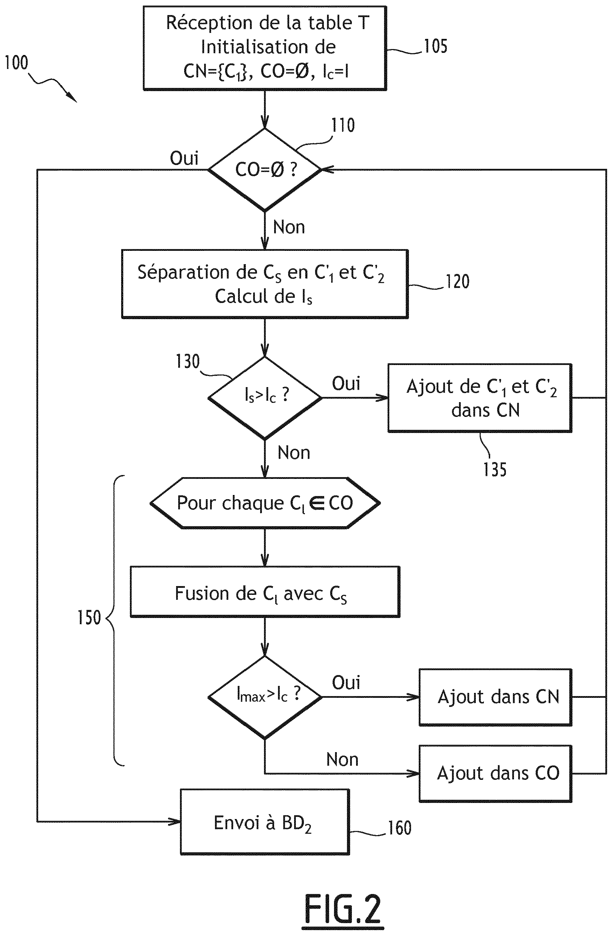

L'organigramme du procédé de classification non supervisée 100 est représenté sur la figure 2.

Lors d'une étape 105 préliminaire, le logiciel de classification 20 reçoit la table $\mathbb{T}$ correspondant à l'ensemble d'objets $\mathbb{O}$ désignant chacun un évènement du réseau informatique, et à l'ensemble de variables $\mathbb{V}$ décrivant chacun des évènements correspondants, en provenance de la première base de données $BD_1$.

Puis, le logiciel 20 crée un ensemble de classes à séparer *CN* contenant une classe unique $C_1$. Cette classe $C_1$ contient initialement tous les objets $o_i$ de l'ensemble d'objets $\mathbb{O}$, c'est-à-dire :

$$CN = \{C_1\}, \quad C_1 = \mathbb{O}.$$

Le logiciel 20 crée en outre un ensemble de classes insécables *CO,* cet ensemble *CO* est initialement vide, c'est-à-dire :

$$CO = \emptyset.$$

Le logiciel 20 obtient ainsi une partition *Par* contenant une seule classe $C_1$, c'est-à-dire :

$$Par = \{C_1\}.$$

Il également possible de définir plusieurs classes différentes dans la partition initiale de façon que l'ensemble de ces classes contient chaque objet de l'ensemble d'objets.

Puis, le logiciel 20 calcule l'indicateur de qualité *I* de cette partition *Par* et définit une variable *Ic* appelé également « indicateur courant de qualité » et égale à la valeur de cet indicateur *I*.

Si lors de l'étape 110 l'ensemble de classes à séparer *CN* n'est pas vide, le logiciel 20 passe à l'étape 120.

Lors de cette étape 120, le logiciel 20 sélectionne une classe $C_s$ dans l'ensemble de classes à séparer *CN* et sépare cette classe en deux classes intermédiaires complémentaires $C'_1$ et $C'_2$, c'est-à-dire :

$$C_s = C'_1 \cup C'_2,$$

$$C'_1 \cap C'_2 = \emptyset.$$

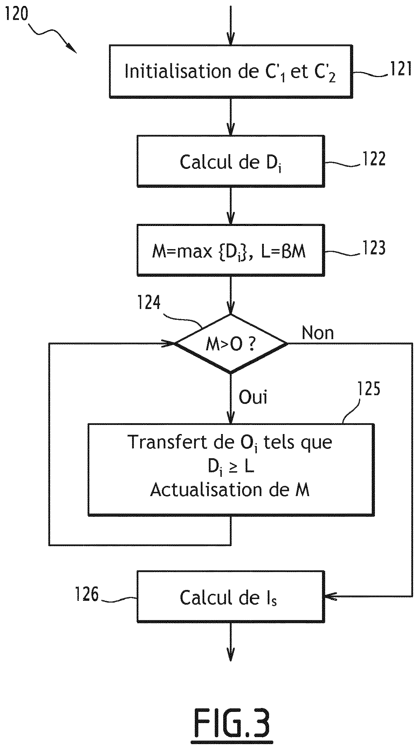

La séparation de cette classe $C_s$ s'effectue en plusieurs sous-étapes décrites ci-dessous. La figure 3 illustre un organigramme de cette étape 120.

Lors de la sous-étape 121, le logiciel 20 initialise les deux classes intermédiaires $C'_1$ et $C'_2$ en distribuant chaque objet $o_i$ de la classe $C_l$ dans l'une des classes intermédiaires.

Cette distribution s'effectue par exemple aléatoirement ou en appliquant une loi de distribution prédéterminée.

Puis, le logiciel 20 calcule un indicateur local courant de qualité *Ilc* correspondant à l'indicateur de qualité de la partition *Par*\ $\{C_s\} \cup \{C'_1\} \cup \{C'_2\}$.

Lors de la sous-étape 122, pour chaque objet $o_i$ de la première classe intermédiaire $C'_1$, le logiciel 20 calcule une valeur de transfert $D_i$ correspondant à la différence entre l'indicateur de qualité *I* d'une partition obtenue après un transfert de cet objet $o_i$ vers la deuxième classe intermédiaire $C'_2$, et l'indicateur local courant de qualité *Ilc,* c'est-à-dire :

$$D_i = I(Par \backslash \{C_s\} \cup \{C_1' \backslash \{o_i\}\} \cup \{C_2' \cup \{o_i\}\}) - Ilc.$$

Le même calcul est effectué pour les objets de la deuxième classe intermédiaire.

Lors de la sous-étape 123, le logiciel 20 calcule une valeur de transfert maximale $M$ parmi toutes les valeurs de transfert $D_i$ obtenues, c'est-à-dire :

$$M = \max \{D_i \mid 1 \leq i \leq |C_1'|\}.$$

Lors de cette même sous-étape, le logiciel 20 calcule un seuil de transfert $L$ égal au produit de la valeur de transfert maximale $M$ et d'une variable de transfert $\beta$ comprise entre 0 et 1, c'est-à-dire :

$$L = \beta M.$$

Tant que la valeur de transfert maximale $M$ est supérieure à zéro lors de la sous-étape 124, le logiciel 20 passe à la sous-étape 125 suivante.

Lors de cette sous-étape 125, le logiciel 20 choisit un des objets correspondant à la valeur de transfert maximale $M$ et fait le transfert de tous les objets $o_i$ de la même classe intermédiaire que l'objet choisi ayant les valeurs de transfert $D_i$ supérieures ou égales au seuil de transfert $L$, vers l'autre classe intermédiaire $C_2'$.

Puis, le logiciel 20 calcule un indicateur local suivant de qualité $Ils$ correspondant à l'indicateur de qualité $I$ de la partition obtenue, c'est-à-dire :

$$Ils = I(Par \backslash \{C_s\} \cup \{C_1' \backslash T\} \cup \{C_2' \cup T\})$$

où $T$ est un ensemble défini par la relation suivante :

$$T = \{o_i \mid D_i \geq L\}.$$

Si l'indicateur local suivant de qualité $Ils$ est supérieur à l'indicateur local courant de qualité $Ilc$, le logiciel 20 diminue la valeur de la variable de transfert $\beta$ et actualise l'indicateur local courant de qualité $Ilc$ par l'indicateur local suivant de qualité $Ils$. En outre, le logiciel 20 actualise les valeurs $D_i$ et $M$.

Dans le cas contraire, le logiciel 20 augmente la valeur de la variable de transfert $\beta$ et fait un transfert inverse.

Si lors de la sous-étape 124, la valeur de transfert maximale $M$ est inférieure ou égale à zéro, lors de la sous-étape 126, le logiciel 29 calcule un indicateur suivant de qualité $Is$ correspondant à l'indicateur de qualité de la partition $Par'$ définie par la relation suivante :

$$Par' = Par \backslash \{C_s\} \cup \{C_1'\} \cup \{C_2'\}$$

Si l'indicateur $Is$ est supérieur à l'indicateur $Ic$, la séparation de la classe $C_l$ est effectuée et la partition $Par$ obtenue est associée à la partition $Par'$, c'est-à-dire :

$$Par = Par'.$$

Dans le cas contraire, le logiciel 20 réessaye de séparer la classe sélectionnée plusieurs fois afin d'atteindre une qualité améliorée de la partition.

Puis, lors de cette étape 130, le logiciel 20 compare l'indicateur courant de qualité $Ic$ avec l'indicateur suivant de qualité $Is$.

Si l'indicateur suivant de qualité $Is$ est supérieur à l'indicateur courant $Ic$ de qualité, le logiciel 20 ajoute les deux classes intermédiaires $C_1'$ et $C_2'$ dans l'ensemble de classes à séparer $CN$ lors de l'étape 135, c'est-à-dire :

$$CN' = CN \cup \{C_1'\} \cup \{C_2'\}, \quad CN = CN'$$

et puis, passe à l'étape 110.

Dans le cas contraire, lors de l'étape 150, pour chaque classe $C_l$ de l'ensemble de classes insécables $CO$,

le logiciel 20 calcule l'indicateur de qualité $I_l$ d'une partition $Par'$ obtenue après une fusion de cette classe avec la classe sélectionnée $C_S$, c'est-à-dire :

$$I_l = (Par'), \quad Par' = Par\backslash\{C_s\} \cup \{C_S \cup C_l\}$$

avec $C_l \in CO$.

Puis, le logiciel 20 calcule un indicateur maximal de qualité $Imax$ parmi tous les indicateurs de qualité $I_l$ calculés.

Si l'indicateur maximal $Imax$ de qualité est supérieur à l'indicateur courant de qualité $Ic$, le logiciel 20 ajoute la classe fusionnée correspondant à cet indicateur maximal de qualité $Imax$, dans l'ensemble de classes à séparer $CN$, c'est-à-dire :

$$CN' = CN \cup \{C_1' \cup C_l\},$$

$$CN = CN'.$$

Puis, le logiciel 20 actualise la partition $Par$ par la partition $Par'$ correspondant à cet indicateur maximal $Imax$ de qualité.

Dans le cas contraire, le logiciel 20 ajoute la classe sélectionnée $C_s$ dans l'ensemble de classes insécables $CO$, c'est-à-dire :

$$CO' = CO \cup \{C_s\}.$$

Puis, le logiciel passe à l'étape 110.

Lors de l'étape 160, le logiciel 20 détermine pour chaque classe $C_l$ une liste d'événements correspondant aux objets $o_i$ que cette classe $C_l$ contient selon la partition obtenue $Par = CO$.

Puis, le logiciel 20 envoie l'ensemble des listes obtenues vers la base de données $BD_2$.

Cette base de données $BD_2$ est ensuite exploitée pour l'analyse des évènements du réseau informatique.

En particulier, le logiciel 20 détecte des anomalies ou des intrusions dans le réseau informatique, en distinguant dans la partition obtenue des objets dits normaux $on$ correspondant aux évènements normaux, et des objets dits anormaux $oa$ correspondant aux évènements anormaux.

Selon une hypothèse, les objets normaux $on$ sont fortement majoritaires dans l'ensemble d'objets $\mathbb{O}$ alors que les objets anormaux $oa$ sont minoritaires.

Ainsi, la détection d'anomalies consiste à associer un niveau d'anormalité $AL$ pour chaque classe de la partition obtenue, les objets anormaux $oa$ étant contenues dans chaque classe avec un niveau d'anormalité supérieur à un seuil d'anormalité prédéterminé $AT$.

Ce niveau d'anormalité $AL$ est déterminé pour chaque partition obtenue $Par$ à l'aide de la fonction de dissimilarité globale $\overline{S}_{ij}$ de chaque couple.

Pour calculer ce niveau d'anormalité $AL$, lors du procédé de classification, le logiciel 20 construit un graphe $G$ dont chaque nœud $\eta$ correspond à une exécution de l'étape 120 de séparation ou de l'étape 150 de fusion si cette fusion a amélioré l'indicateur de qualité de la partition $Par$.

Chaque nœud de ce graphe $G$ contient en plus des informations sur une classe temporaire $P$ sur lequel le calcul lors de l'étape correspondante a été effectué. Ainsi, la classe $P$ correspond à la classe sélectionnée $C_s$ lors de l'étape 120 de séparation et à la classe fusionnée lors de l'étape 150 de fusion.

Le graphe $G$ est stocké par exemple dans la mémoire 16.

Le niveau d'anormalité $AL$ pour une classe $C_i$ de la partition $Par$ finale est défini par la relation suivante :

$$AL(C_i) = \left( \sum_{\eta \in G} \sum_{j \neq i} \frac{|C_i(P)||C_j(P)|}{|C_i||C_j|} \sum_{a \in C_i} \sum_{b \in C_j} \overline{S}_{ab} \right) / \left( \sum_{\eta \in G} |C_i(P)|(|P| - |C_i(P)|) \right)$$

où $C_i(P)$ est un ensemble induit par la classe temporaire P sur la partition finale *Par*. Cet ensemble est définie par la relation suivante :

$$C_i(P) = C_i \cap P.$$

Finalement, le logiciel 20 compare le niveau d'anormalité *AL* de chaque classe avec le seuil prédéterminé. Les évènements anormaux du réseau informatique correspondent aux objets $o_i$ contenus dans les classes ayant le niveau d'anormalité *AL* supérieur à ce seuil.

En variante, pour un dispositif 10 comportant plusieurs processeurs 14, une ou plusieurs étapes du procédé 100 sont exécutées en parallèle.

Selon un mode de réalisation de l'invention, le calcul des valeurs de transfert $D_i$ lors des sous-étapes 122 et 125 du procédé 100 est optimisé par la formule suivante :

$$D_a = (2\beta - (1-\beta))S_{aa} - 2\sum_{o_i \in C'_1} S_{ia} + 2\sum_{o_i \in C'_2} S_{ia} - (1-\beta)\left( \sum_{o_i \in C'_2} S_{ii} - \sum_{o_i \in C'_1} S_{ii} \right)$$

où $D_a$ correspond à la valeur de transfert de l'objet $o_a \in C'_1$,

Pour les variables qualitatives les expressions ci-dessus prennent la forme suivante :

$$\sum_{o_i \in C_l} S_{ia} = C_l(v_a)\left( 1 - \frac{\mathbb{O}(v_a)}{N} \right)$$

et pour les variables quantitatives :

$$\sum_{o_i \in C_l} S_{ia} = |C_l| - \frac{1}{N}\left( \sum_{o_i \in C_l} N_{i\ a+1} + |\{o_i \in C_l | a < i\}| - |\{o_i \in C_l | a \geq i\}| \right)$$

où

$$N_{i\ a+1} = \sum_{k=1}^{M} N^k_{i\ a+1}.$$

Le calcul d'une partition selon le procédé de classification non supervisée 100 avec cette optimisation s'effectue en pratique en temps expérimentalement linéaire par rapport au nombre d'objets *N*.

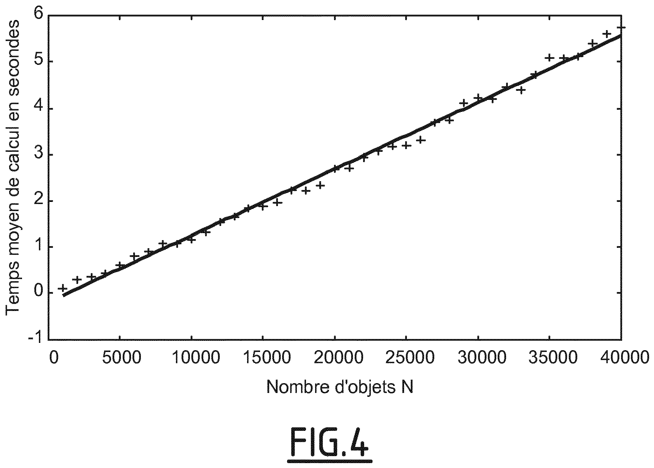

La figure 4 illustre un graphe de la dépendance du temps de calcul d'une partition par rapport au nombre d'objets *N*. Le nombre d'objets *N* varie entre 0 et 40 000.

Le graphe illustré sur la figure 4 permet de conclure que cette dépendance est une fonction linéaire.

Le procédé de classification non supervisée permet de déterminer une partition d'objets en une pluralité de classes sans avoir nécessité de définir le nombre de classes a priori. De plus, ce procédé permet de traiter un grand nombre de données hétérogènes en temps expérimentalement linéaire ce qui constitue un avantage particulier de la présente invention.

En outre, ce procédé permet de détecter des objets « anormaux » dans la base de données initiale en temps expérimentalement linéaire.

Ce procédé est simple en réalisation et se base sur la théorie de l'analyse relationnelle connue dans l'état de la technique d'après les travaux de Marcotorchino et Michaud.

**Revendications**

1. Procédé (100) de détermination d'événements anormaux dans un réseau informatique, pour détecter des intrusions dans des flux du réseau informatique, consistant en une classification non supervisée d'une pluralité d'objets ($o_i$) techniques constituant chacun un évènement dans le réseau informatique, pour obtenir une partition (Par) de ces objets en une pluralité de classes ($C_l$) permettant d'analyser ces objets afin de déterminer des évènements anormaux, chaque objet technique ($o_i$) étant décrit par une variable ($v_k$) quantitative ou par une variable ($v_k$) qualitative, la qualité de la partition (Par) obtenue étant décrite par un indicateur (I) de qualité de cette partition (Par), le procédé (100) étant mis en œuvre par un dispositif (10) de détermination d'événements anormaux et comportant une étape (105) initiale comprenant :

   - la création d'un ensemble de classes à séparer (CN) comportant une ou plusieurs classes complémentaires composées de tous les objets techniques ($o_i$), et d'un ensemble vide de classes insécables (CO) ; et
   - le calcul d'un indicateur courant de qualité (Ic) correspondant à l'indicateur de qualité (I) de la partition (Par) obtenue ;

   et le procédé (100) étant **caractérisé en ce qu'**il comprend les étapes suivantes :

   - la séparation (120) d'une classe sélectionnée ($C_s$) dans l'ensemble de classes à séparer (CN) en deux classes intermédiaires $(C'_1, C'_2)$ et le calcul d'un indicateur suivant de qualité (Is) correspondant à l'indicateur de qualité (I) de la partition obtenue ;
   - si l'indicateur suivant de qualité (Is) est supérieur à l'indicateur courant de qualité (Ic), l'ajout (135) des deux classes intermédiaires $(C'_1, C'_2)$ dans l'ensemble de classes à séparer (CN) ;
   - dans le cas contraire :

      + pour chaque classe ($C_l$) de l'ensemble de classes insécables (CO), le calcul de l'indicateur de qualité ($I_l$) d'une partition (Par) obtenue après une fusion de cette classe ($C_l$) avec la classe sélectionnée ($C_s$) ;
      + le calcul d'un indicateur maximal (Imax) parmi tous les indicateurs de qualité ($I_l$) calculés ;
      + si l'indicateur maximal de qualité (Imax) est supérieur à l'indicateur courant de qualité (Ic), l'ajout de la classe fusionnée correspondant à cet indicateur maximal de qualité, dans l'ensemble de classes à séparer (CN) ;
      + dans le cas contraire, l'ajout de la classe sélectionnée ($C_s$) dans l'ensemble de classes insécables (CO) ;

   le procédé (100) comprenant en outre une étape de recherche d'événements anormaux dans chaque partition (Par) obtenue, consistant à associer un niveau d'anormalité (AL) pour chaque classe ($C_l$) de la partition (Par) obtenue, des évènements anormaux étant contenus dans chaque classe ($C_l$) avec un niveau d'anormalité (AL) supérieur à un seuil d'anormalité (AT) prédéterminé ;
   au moins certains des évènements anormaux correspondent à des intrusions dans des flux du réseau informatique ; chaque évènement étant un évènement mémorisé comme :

      - la connexion d'un utilisateur à un ordinateur donné ;
      - la durée ou la fréquence de cette connexion supérieure à un seuil prédéterminé ;
      - la taille totale de paquets échangés supérieure à un seuil prédéterminé.

2. Procédé (100) selon la revendication 1, **caractérisé en ce que** l'étape de séparation (120) d'une classe ($C_l$) en deux classes intermédiaires $(C'_1, C'_2)$ comprend les sous-étapes suivantes :

   - l'affectation (121) de chaque objet ($o_i$) de la classe ($C_l$) à séparer à une première classe intermédiaire $(C'_1)$ ou à une deuxième classe intermédiaire $(C'_2)$ et le calcul d'un indicateur local courant de qualité (Ilc) correspondant à l'indicateur de qualité (*I*) de la partition (*Par*) obtenue ;

- pour chaque objet (*o_i*) de la première classe intermédiaire $(C_1')$, le calcul (122) d'une valeur de transfert (*D_i*) correspondant à la différence entre l'indicateur de qualité (*I*) d'une partition obtenue après un transfert de cet objet (*o_i*) vers la deuxième classe intermédiaire $(C_2'),$ et l'indicateur local courant de qualité (*IIc*) ;

- le calcul (123) d'une valeur de transfert maximale (*M*) parmi toutes les valeurs de transfert (*D_i*) obtenues et l'initialisation d'un seuil de transfert (*L*), le seuil de transfert (*L*) étant proportionnel à la valeur de transfert (*D_i*) ;

- tant que la valeur de transfert (*D_i*) est supérieure à zéro :

+ la sélection d'un des objets (*o_i*) correspondant à la valeur de transfert maximale (*M*) et le transfert de tous les objets (*o_i*) de la même classe intermédiaire $(C_1', C_2')$ que l'objet sélectionné et les valeurs de transfert (*D_i*) supérieures ou égales au seuil de transfert (*L*), vers l'autre classes intermédiaires $(C_1', C_2')$ ;

+ le calcul d'un indicateur local suivant de qualité (*IIs*) correspondant à l'indicateur de qualité (*I*) de la partition (*Par*) obtenue ;

+ l'actualisation de la valeur de transfert maximale (*M*) et de l'indicateur local courant de qualité (*IIc*) par l'indicateur local suivant de qualité (*IIs*).

3. Procédé (100) selon la revendication 2, **caractérisé en ce que** :

- le seuil de transfert (*L*) est diminué si l'indicateur local suivant de qualité (*IIs*) est supérieur à l'indicateur local courant de qualité (*IIc*) ; et
- le seuil de transfert (*L*) est augmenté dans le cas contraire.

4. Procédé (100) selon l'une quelconque des revendications précédentes, **caractérisé en ce que** l'indicateur de qualité (*I*) d'une partition (*Par*) donnée dépend de chaque fonction de similarité $(S_{ij}^k)$ de chaque couple d'objets (*o_i;o_j*) définie pour chaque variable (*v_k*) quantitative ou qualitative.

5. Procédé (100) selon la revendication 4, **caractérisé en ce que** la fonction de similarité $(S_{ij}^k)$ d'un couple d'objets (*o_i; o_j*) formé d'un premier objet (*o_i*) et d'un deuxième objet (*o_j*), pour une variable qualitative (*v_k*), est une fonction d'un nombre d'objets $(C_{i*}^k)$ sur lesquelles cette variable qualitative (*v_k*) prend une même valeur $(o_i^k)$ qui est égale à la valeur $(o_i^k)$ de cette variable qualitative (*v_k*) sur le premier objet (*o_i*).

6. Procédé (100) selon la revendication 4 ou 5, **caractérisé en ce que** la fonction de similarité $(S_{ij}^k)$ d'un couple d'objets (*o_i; o_j*) formé d'un premier objet (*o_i*) et d'un deuxième objet (*o_j*), pour une variable quantitative (*v_k*), est une fonction d'un nombre d'objets $(N_{ij}^k)$ sur lesquelles cette variable quantitative (*v_k*) prend une valeur (*o^k*) comprise dans un intervalle défini par des valeurs correspondant aux valeurs $(o_i^k; o_j^k)$ que prend cette variable quantitative (*v_k*) sur le premier objet (*o_i*) et sur le deuxième objet (*o_j*).

7. Procédé selon l'une quelconque des revendications précédentes, **caractérisé en ce que** le niveau d'anormalité (*AL*) est déterminé pour chaque classe (*C_i*) à l'aide d'une fonction de dissimilarité globale $(\overline{S}_{ij})$ de chaque couple d'objets (*o_i;o_j*) déterminant la dissemblance de ces objets (*o_i;o_j*) indépendamment des variables *v_k*.

8. Produit programme d'ordinateur comportant des instructions logicielles qui, lorsqu'elles sont mises en œuvre par un ordinateur, mettent en œuvre le procédé (100) selon l'une quelconque des revendications précédentes.

9. Dispositif (10) de détermination d'événements anormaux dans un réseau informatique, pour détecter des intrusions dans des flux du réseau informatique, pour la classification non-supervisée d'une pluralité d'objets (*o_i*) techniques

constituant chacun un évènement dans le réseau informatique, pour obtenir une partition (*Par*) de ces objets en une pluralité de classes (*Cl*) permettant d'analyser ces objets afin de déterminer des évènements anormaux, chaque objet technique (*oi*) étant décrit par une variable (*vk*) quantitative ou par une variable (*vk*) qualitative, la qualité de la partition (*Par*) obtenue étant décrite par un indicateur (*I*) de qualité de cette partition (*Par*),

le dispositif (10) étant **caractérisé en ce qu'**il comporte des moyens de traitement aptes à :

- créer un ensemble de classes à séparer (*CN*) comportant une ou plusieurs classes complémentaires composées de tous les objets techniques (*oi*), et un ensemble vide de classes insécables (CO) ; et
- calculer un indicateur courant de qualité (*Ic*) correspondant à l'indicateur de qualité (*I*) de la partition (*Par*) obtenue ;
- séparer (120) une classe sélectionnée (*Cs*) dans l'ensemble de classes à séparer (*CN*) en deux classes intermédiaires $(C_1', C_2')$ et calculer un indicateur suivant de qualité (*Is*) correspondant à l'indicateur de qualité (*I*) de la partition obtenue ;
- si l'indicateur suivant de qualité (*Is*) est supérieur à l'indicateur courant de qualité (*Ic*), ajouter (135) les deux classes intermédiaires $(C_1', C_2')$ dans l'ensemble de classes à séparer (*CN*) ;
- dans le cas contraire :

+ pour chaque classe (*Cl*) de l'ensemble de classes à séparer (*CN*), calculer l'indicateur de qualité (*Il*) d'une partition (*Par*) obtenue après une fusion de cette classe (*Cl*) avec la classe sélectionnée (*Cs*) ;
+ calculer un indicateur maximal (*Imax*) parmi tous les indicateurs de qualité (*Il*) calculés ;
+ si l'indicateur maximal de qualité (*Imax*) est supérieur à l'indicateur courant de qualité (*Ic*), ajouter la classe fusionnée correspondant à cet indicateur maximal de qualité, dans l'ensemble de classes à séparer (*CN*) ;
+ dans le cas contraire, ajouter la classe sélectionnée (*Cs*) dans l'ensemble de classes insécables (*CO*) ;

les moyens de traitement étant aptes en outre à rechercher des évènements anormaux dans chaque partition (*Par*) obtenue en associant un niveau d'anormalité (*AL*) pour chaque classe (*Cl*) de la partition (*Par*) obtenue, des évènements anormaux étant contenus dans chaque classe (*Cl*) avec un niveau d'anormalité (*AL*) supérieur à un seuil d'anormalité (*AT*) prédéterminé ;

au moins certains des évènements anormaux correspondent à des intrusions dans des flux du réseau informatique ;

chaque évènement étant un évènement mémorisé comme :

- la connexion d'un utilisateur à un ordinateur donné ;
- la durée ou la fréquence de cette connexion supérieure à un seuil prédéterminé ;
- la taille totale de paquets échangés supérieure à un seuil prédéterminé.

## Patentansprüche

1. Verfahren (100) zur Bestimmung anomaler Ereignisse in einem Datennetzwerk zur Erkennung von Eindringangriffen in Datenflüsse des Datennetzwerks, bestehend aus einer nicht überwachten Klassifizierung einer Vielzahl technischer Objekte (*oi*), die jeweils ein Ereignis im Datennetzwerk darstellen, um eine Unterteilung (*Par*) dieser Objekte in eine Vielzahl von Klassen (*Cl*) zu erhalten, die es ermöglichen, diese Objekte zu analysieren, um anomale Ereignisse zu bestimmen, wobei jedes technische Objekt (*oi*) durch eine quantitative Variable (*vk*) oder durch eine qualitative Variable (*vk*) beschrieben ist, wobei die Qualität der erhaltenen Unterteilung (*Par*) durch einen Qualitätsindikator (*I*) dieser Unterteilung (*Par*) beschrieben ist,

wobei das Verfahren (100) durch eine Vorrichtung (10) zur Bestimmung anomaler Ereignisse ausgeführt wird und einen anfänglichen Schritt (105) beinhaltet, der umfasst:

- Erzeugung eines Satzes zu trennender Klassen (*CN*), der eine oder mehrere komplementäre Klassen umfasst, die aus allen technischen Objekten (*oi*) bestehen, und eines leeren Satzes unteilbarer Klassen (*CO*); und
- Berechnung eines aktuellen Qualitätsindikators (*Ic*), der dem Qualitätsindikator (*I*) der erhaltenen Unterteilung (*Par*) entspricht;

und wobei das Verfahren (100) **dadurch gekennzeichnet ist, dass** es die folgenden Schritte umfasst:

- Trennung (120) einer ausgewählten Klasse ($C_s$) im Satz zu trennender Klassen ($CN$) in zwei Zwischenklassen ($C'_1$, $C'_2$) und Berechnung eines nachfolgenden Qualitätsindikators ($Is$), der dem Qualitätsindikator ($I$) der erhaltenen Unterteilung entspricht;
- wenn der nachfolgende Qualitätsindikator ($Is$) größer ist als der aktuelle Qualitätsindikator ($Ic$), Hinzufügung (135) von zwei Zwischenklassen ($C'_1$, $C'_2$) in den Satz zu trennender Klassen ($CN$);
- im gegenteiligen Fall:

  • für jede Klasse ($C_l$) des Satzes unteilbarer Klassen ($CO$) Berechnung des Qualitätsindikators ($I_l$) einer Unterteilung ($Par$), die nach einer Vereinigung dieser Klasse ($C_l$) mit der ausgewählten Klasse ($C_s$) erhalten wird;
  • Berechnung eines maximalen Indikators ($Imax$) unter allen berechneten Qualitätsindikatoren ($I_l$);
  • wenn der maximale Qualitätsindikator ($Imax$) größer ist als der aktuelle Qualitätsindikator ($Ic$), Hinzufügung der vereinigten Klasse, die diesem maximalen Qualitätsindikator entspricht, in den Satz zu trennender Klassen ($CN$);
  • im gegenteiligen Fall Hinzufügung der ausgewählten Klasse ($C_s$) in den Satz unteilbarer Klassen ($CO$);

wobei das Verfahren (100) außerdem einen Schritt des Suchens anomaler Ereignisse in jeder erhaltenen Unterteilung ($Par$) umfasst, der darin besteht, pro Klasse ($C_l$) der erhaltenen Unterteilung ($Par$) ein Anomalitätsniveau ($AL$) zuzuordnen, wobei in jeder Klasse ($C_l$) anomale Ereignisse mit einem Anomalitätsniveau ($AL$) über einem vorbestimmten Anomalitätsschwellenwert ($AT$) enthalten sind;
wobei wenigstens manche der anomalen Ereignisse Eindringangriffen in den Datenflüssen des Datennetzwerks entsprechen;
wobei jedes Ereignis ein gespeichertes Ereignis ist wie:

- die Verbindung eines Benutzers mit einem bestimmten Computer;
- die Dauer oder Häufigkeit dieser Verbindung größer als ein vorbestimmter Schwellenwert;
- die Gesamtgröße der ausgetauschten Pakete größer als ein vorbestimmter Schwellenwert.

2. Verfahren (100) nach Anspruch 1, **dadurch gekennzeichnet, dass** der Schritt der Trennung (120) einer Klasse ($C_l$) in zwei Zwischenklassen ($C'_1$, $C'_2$) die folgenden Teilschritte umfasst:

- Zuweisung (121) jedes Objekts ($o_i$) der zu trennenden Klasse ($C_l$) zu einer ersten Zwischenklasse ($C'_1$) oder zu einer zweiten Zwischenklasse ($C'_2$) und Berechnung eines aktuellen lokalen Qualitätsindikators ($Ilc$), der dem Qualitätsindikator ($I$) der erhaltenen Unterteilung ($Par$) entspricht;
- für jedes Objekt ($o_i$) der ersten Zwischenklasse ($C'_1$) Berechnung (122) eines Transferwerts ($D_i$), der der Differenz zwischen dem Qualitätsindikator ($I$) einer erhaltenen Unterteilung nach einem Transfer dieses Objekts ($o_i$) zu der zweiten Zwischenklasse ($C'_2$) und dem lokalen aktuellen Qualitätsindikator ($Ilc$) entspricht;
- Berechnung (123) eines maximalen Transferwerts ($M$) unter allen erhaltenen Transferwerten ($D_i$) und Initialisierung eines Transferschwellenwerts ($L$), wobei der Transferschwellenwert ($L$) proportional zum Transferwert ($Di$) ist;
- solange der Transferwert ($D_i$) größer als null ist:

  • Auswahl eines der Objekte ($o_i$), die dem maximalen Transferwert ($M$) entsprechen und Transfer aller Objekte ($o_i$) derselben Zwischenklasse ($C'_1$, $C'_2$) wie das ausgewählte Objekt und die Transferwerte ($D_i$), größer oder gleich dem Transferschwellenwert ($L$) in die andere der Zwischenklassen ($C'_1$, $C'_2$);
  • Berechnung eines nachfolgenden lokalen Qualitätsindikators ($Ils$), der dem Qualitätsindikator ($I$) der erhaltenen Unterteilung ($Par$) entspricht;
  • Aktualisierung des maximalen Transferwerts ($M$) und des aktuellen lokalen Qualitätsindikators ($Ilc$) durch den nachfolgenden lokalen Qualitätsindikator ($Ils$).

3. Verfahren (100) nach Anspruch 1, **dadurch gekennzeichnet, dass**:

- der Transferschwellenwert (L) verringert wird, wenn der nachfolgende lokale Qualitätsindikator ($Ils$) größer ist als der aktuelle lokale Qualitätsindikator ($Ilc$); und
- der Transferschwellenwert (L) im gegenteiligen Fall erhöht wird.

4. Verfahren (100) nach einem der vorhergehenden Ansprüche, **dadurch gekennzeichnet, dass** der Qualitätsindikator (*I*) einer bestimmten Unterteilung (*Par*) von jeder Ähnlichkeitsfunktion $(S_i^k{}_j)$ jedes Objektpaars ($o_i$;$o_j$) abhängt, die für jede quantitative oder qualitative Variable ($v_k$) definiert ist.

5. Verfahren (100) nach Anspruch 4, **dadurch gekennzeichnet, dass** die Ähnlichkeitsfunktion $(S_i^k{}_j)$ eines Objektpaars ($o_i$;$o_j$), gebildet aus einem ersten Objekt ($o_i$) und einem zweiten Objekt ($o_j$), für eine qualitative Variable ($v_k$) eine Funktion einer Anzahl von Objekten $(C_i^k{}_*)$ ist, bei denen diese qualitative Variable ($v_k$) einen gleichen Wert $(o_i^k)$ annimmt, der gleich dem Wert $(o_i^k)$ dieser qualitativen Variablen ($v_k$) beim ersten Objekt ($o_i$) ist.

6. Verfahren (100) nach Anspruch 4 oder 5, **dadurch gekennzeichnet, dass** die Ähnlichkeitsfunktion $(S_i^k{}_j)$ eines Objektpaars ($o_i$;$o_j$), gebildet aus einem ersten Objekt ($o_i$) und einem zweiten Objekt ($o_j$), für eine quantitative Variable ($v_k$) eine Funktion einer Anzahl von Objekten $(N_i^k{}_j)$ ist, bei denen diese quantitative Variable ($v_k$) einen Wert ($o^k$) annimmt, der in einem Intervall liegt, das durch die Werte definiert ist, die den Werten $(o_i^k;o_j^k)$ entsprechen, die diese quantitative Variable ($v_k$) bei dem ersten Objekt ($o_i$) und bei dem zweiten Objekt ($o_j$) annimmt.

7. Verfahren nach einem der vorhergehenden Ansprüche, **dadurch gekennzeichnet, dass** das Anomalitätsniveau (*AL*) für jede Klasse ($C_l$) mithilfe einer Funktion der Gesamtunähnlichkeit ($\overline{S}_{ij}$) jedes Objektpaars ($o_i$;$o_j$) bestimmt wird, die die Nichtübereinstimmung dieser Objekte ($o_i$;$o_j$) unabhängig von den Variablen $v_k$ bestimmt.

8. Computerprogrammprodukt, das Softwareanweisungen umfasst, die bei Ausführung durch einen Computer das Verfahren (100) nach einem der vorhergehenden Ansprüche ausführen.

9. Vorrichtung (10) zur Bestimmung anomaler Ereignisse in einem Datennetzwerk zur Erkennung von Eindringangriffen in den Datenflüssen des Datennetzwerks für die nicht überwachte Klassifizierung einer Vielzahl technischer Objekte ($o_i$), die jeweils ein Ereignis im Datennetzwerk darstellen, um eine Unterteilung (*Par*) dieser Objekte in eine Vielzahl von Klassen ($C_l$) zu erhalten, die es ermöglichen, diese Objekte zu analysieren, um anomale Ereignisse zu bestimmen, wobei jedes technische Objekt ($o_i$) durch eine quantitative Variable ($v_k$) oder durch eine qualitative Variable ($v_k$) beschrieben ist, wobei die Qualität der erhaltenen Unterteilung (*Par*) durch einen Qualitätsindikator (*I*) dieser Unterteilung (*Par*) beschrieben ist,
   wobei die Vorrichtung (10) **dadurch gekennzeichnet ist, dass** sie Verarbeitungsmittel umfasst, die geeignet sind zum:

   - Erzeugen eines Satzes zu trennender Klassen (*CN*), der eine oder mehrere komplementäre Klassen umfasst, die aus allen technischen Objekten ($o_i$) bestehen, und eines leeren Satzes unteilbarer Klassen (*CO*); und
   - Berechnen eines aktuellen Qualitätsindikators (*Ic*), der dem Qualitätsindikator (*I*) der erhaltenen Unterteilung (*Par*) entspricht;
   - Trennen (120) einer ausgewählten Klasse ($C_s$) im Satz zu trennender Klassen (*CN*) in zwei Zwischenklassen ($C'_1$, $C'_2$) und Berechnen eines nachfolgenden Qualitätsindikators (*Is*), der dem Qualitätsindikator (*I*) der erhaltenen Unterteilung entspricht;
   - wenn der nachfolgende Qualitätsindikator (*Is*) größer ist als der aktuelle Qualitätsindikator (*Ic*), Hinzufügen (135) der zwei Zwischenklassen ($C'_1$, $C'_2$) in den Satz zu trennender Klassen (*CN*);
   - im gegenteiligen Fall:

     • für jede Klasse ($C_l$) des Satzes zu trennender Klassen (*CN*) Berechnen des Qualitätsindikators ($I_l$) einer Unterteilung (*Par*), die nach einer Vereinigung dieser Klasse ($C_l$) mit der ausgewählten Klasse ($C_s$) erhalten wird;
     • Berechnen eines maximalen Indikators (*Imax*) unter allen berechneten Qualitätsindikatoren ($I_l$);
     • wenn der maximale Qualitätsindikator (*Imax*) größer ist als der aktuelle Qualitätsindikator (*Ic*), Hinzufügen der vereinigten Klasse, die diesem maximalen Qualitätsindikator entspricht, in den Satz zu trennender Klassen (*CN*);
     • im gegenteiligen Fall Hinzufügen der ausgewählten Klasse ($C_s$) in den Satz unteilbarer Klassen (*CO*);

wobei die Verarbeitungsmittel außerdem dazu geeignet sind, in jeder erhaltenen Unterteilung (*Par*) anomale Ereignisse zu suchen, indem sie pro Klasse ($C_l$) der erhaltenen Unterteilung (*Par*) ein Anomalitätsniveau (*AL*) zuordnen, wobei in jeder Klasse ($C_l$) anomale Ereignisse mit einem Anomalitätsniveau (*AL*) über einem vorbestimmten Anomalitätsschwellenwert (*AT*) enthalten sind;

wobei wenigstens manche der anomalen Ereignisse Eindringangriffen in den Datenflüssen des Datennetzwerks entsprechen;

wobei jedes Ereignis ein gespeichertes Ereignis ist wie:

- die Verbindung eines Benutzers mit einem bestimmten Computer;
- die Dauer oder Häufigkeit dieser Verbindung größer als ein vorbestimmter Schwellenwert;
- die Gesamtgröße der ausgetauschten Pakete größer als ein vorbestimmter Schwellenwert.

**Claims**

1. A method (100) for determining abnormal events in an IT network, for detecting intrusions into IT network flows, consisting of an unsupervised clustering of a plurality of technical objects ($o_i$) each constituting an event in the IT network, in order to obtain a partition (*Par*) of these objects into a plurality of clusters ($C_l$) thereby providing the ability to analyse these objects in order to determine the incidence of abnormal events, with each technical object ($o_i$) being described by a quantitative variable ($v_k$) or by a qualitative variable ($v_k$), the quality of the partition (*Par*) obtained being described by an indicator (*I*) of quality of this partition (*Par*),
the method (100) being performed by a device (10) for determining abnormal events and including an initial step (105) comprising of:

- the creation of a set of clusters to be separated (*CN*) including one or more additional clusters composed of all of the technical objects ($o_i$), and an empty set of indivisible clusters (*CO*); and
- the calculation of a current indicator of quality (*Ic*) corresponding to the quality indicator (*I*) of the partition (*Par*) obtained;

and the method (100) being **characterised in that** it includes the following steps:

- the separation (120) of a selected cluster ($C_s$) within the set of clusters to be separated (*CN*) into two intermediate clusters $(C'_1, C'_2)$ and the calculation of a subsequent indicator of quality (*Is*) corresponding to the quality indicator (*I*) of the partition obtained;
- if the subsequent indicator of quality (*Is*) is greater than the current quality indicator (*Ic*), the addition (135) of the two intermediate clusters $(C'_1, C'_2)$ into the set of clusters to be separated (*CN*);
- otherwise in the contrary case:

+ for each cluster ($C_l$) in the set of indivisible clusters (*CO*), the calculation of the indicator of quality ($I_l$) of a partition (*Par*) obtained after the merging of this cluster ($C_l$) with the selected cluster ($C_s$);
+ the calculation of a maximum indicator (*Imax*) from among all the calculated quality indicators ($I_l$);
+ if the maximum indicator of quality (*Imax*) is greater than the current indicator of quality (*Ic*), the addition of the merged cluster corresponding to this maximum indicator of quality, into the set of clusters to be separated (*CN*);
+ otherwise in the contrary case, the addition of the selected cluster ($C_s$) into the set of indivisible clusters (*CO*);

the method (100) further including a step of searching for abnormal events in each partition (*Par*) obtained, consisting of associating a level of abnormality (*AL*) for each cluster ($C_l$) of the partition (*Par*) obtained, the abnormal events being contained in each cluster ($C_l$) with a level of abnormality (*AL*) that is higher than a predetermined threshold of abnormality (*AT*) ;

at least certain abnormal events correspond to intrusions into IT network flows;

each event being a memorized event such as:

- the connection of a user to a given computer;
- the duration or frequency of this connection that is greater than a predetermined threshold;

- the total size of packets exchanged that is greater than a predetermined threshold or indeed other events.

2. A method (100) according to claim 1, **characterised in that** the step of separation (120) of a cluster ($C_l$) into two intermediate clusters $(C'_1, C'_2)$ includes the following sub steps:

- the assigning (121) of each object ($o_i$) of the cluster ($C_l$) to be separated to a first intermediate cluster $(C'_1)$ or to a second intermediate cluster $(C'_2)$ and the calculation of a current local indicator of quality (*llc*) corresponding to the indicator of quality (*l*) of the partition (*Par*) obtained;

- for each object ($o_i$) of the first intermediate cluster $(C'_1)$, the calculation (122) of a transfer value ($D_i$) corresponding to the difference between the indicator of quality (*l*) of a partition obtained after the transfer of this object ($o_i$) to the second intermediate cluster $(C'_2)$, and the current local indicator of quality (*llc*);

- the calculation (123) of a maximum transfer value (*M*) from among all the transfer values ($D_i$) obtained and initialisation of a transfer value threshold (*L*), the transfer value threshold (*L*) being proportional to the transfer value ($D_i$);

- as long as the transfer value ($D_i$) is greater than zero:

+ the selection of one of the objects ($o_i$) corresponding to the maximum transfer value (*M*) and the transferring of all the objects ($o_i$) from the same intermediate cluster $(C'_1, C'_2)$ as the selected object and the transfer values ($D_i$) greater than or equal to the transfer value threshold (*L*), to the other intermediate clusters $(C'_1, C'_2)$;

+ the calculation of a subsequent local indicator of quality (*lls*) corresponding to the indicator of quality (*l*) of the partition obtained;

+ the updating of the maximum transfer value (*M*) and the current local indicator of quality (*llc*) by the subsequent local indicator of quality (*lls*).

3. A method (100) according to claim 2, **characterised in that**:

- the transfer value threshold (*L*) is decreased if the subsequent local indicator of quality (*lls*) is greater than the current local indicator of quality (*llc*); and
- the transfer value threshold (*L*) is increased in the contrary case.

4. A method (100) according to any one of the preceding claims, **characterised in that** this quality indicator (*l*) of a given partition (*Par*) depends on each function of similarity $(S^k_{ij})$ of each pair of objects ($o_i;o_j$) defined for each quantitative or qualitative variable ($v_k$).

5. A method (100) according to claim 4, **characterised in that** the function of similarity $(S^k_{ij})$ of a pair of objects ($o_i;o_j$) formed of a first object ($o_i$) and a second object ($o_j$), for a qualitative variable ($v_k$), is a function of a number of objects $(C^k_{i*})$ over which this qualitative variable ($v_k$) takes a same given value $(o^k_i)$ which is equal to the value $(o^k_i)$ of this qualitative variable ($v_k$) over the first object ($o_i$).

6. A method (100) according to claim 4 or 5, **characterised in that** the function of similarity $(S^k_{ij})$ of a pair of objects ($o_i;o_j$) formed of a first object ($o_i$) and a second object ($o_j$), for a quantitative variable ($v_k$), is a function of a number of objects $(N^k_{ij})$ over which this quantitative variable ($v_k$) takes a value ($o^k$) included in an interval defined by the values corresponding to the values $(o^k_i ; o^k_j)$ taken by this quantitative variable ($v_k$) over the first object ($o_i$) and over the second object ($o_j$).

**7.** A method (100) according to any one of the preceding claims, **characterised in that** the level of abnormality *(AL)* is determined for each cluster ($C_l$) by making use of a global dissimilarity function ($\overline{S}_{ij}$) for each pair of objects ($o_i;o_j$) determining the dissimilarity between these objects independently of the variables $v_k$.

**8.** A computer programme product comprising software application instructions that, when implemented by a computer, implement the method (100) according to any preceding claim.

**9.** A device (10) for determination of abnormal events in an IT network, for detecting intrusions into IT network flows, for the unsupervised clustering of a plurality of technical objects ($o_i$) each constituting an event in the IT network, in order to obtain a partition (*Par*) of these objects into a plurality of clusters ($C_l$) thereby providing the ability to analyse these objects in order to determine the incidence of abnormal events, with each technical object ($o_i$) being described by a quantitative variable ($v_k$) or by a qualitative variable ($v_k$), the quality of the partition (*Par*) obtained being described by an indicator (*I*) of quality of this partition (*Par*),
the device (10) being **characterised in that** it comprises the processing means capable of:

- creating a set of clusters to be separated (*CN*) including one or more additional clusters composed of all of the technical objects ($o_i$), and an empty set of indivisible clusters (*CO*); and
- calculating a current indicator of quality (*Ic*) corresponding to the quality indicator (*I*) of the partition (*Par*) obtained;
- separating (120) a selected cluster ($C_s$) within the set of clusters to be separated (*CN*) into two intermediate clusters $(C_1', C_2')$ and calculating a subsequent indicator of quality (*Is*) corresponding to the quality indicator (*I*) of the partition obtained;
- if the subsequent indicator of quality (*Is*) is greater than the current quality indicator (*Ic*), adding (135) the two intermediate clusters $(C_1', C_2')$ into the set of clusters to be separated (*CN*);
- otherwise in the contrary case:

  + for each cluster ($C_l$) in the set of clusters to be separated (*CN*), calculating the indicator of quality ($I_l$) of a partition (*Par*) obtained after the merging of this cluster ($C_l$) with the selected cluster ($C_s$);
  + calculating a maximum indicator (*Imax*) from among all the calculated quality indicators ($I_l$);
  + if the maximum indicator of quality (*Imax*) is greater than the current indicator of quality (*Ic*), adding the merged cluster corresponding to this maximum indicator of quality, into the set of clusters to be separated (*CN*);
  + otherwise in the contrary case, adding the selected cluster ($C_s$) into the set of indivisible clusters (*CO*);

the processing means also being capable of searching for abnormal events in each partition (*Par*) obtained, by associating a level of abnormality (*AL*) for each cluster ($C_l$) of the partition (*Par*) obtained, the abnormal events being contained in each cluster ($C_l$) with a level of abnormality (*AL*) that is higher than a predetermined threshold of abnormality (*AT*);
at least certain abnormal events correspond to intrusions into IT network flows;
each event being a memorized event such as:

- the connection of a user to a given computer;
- the duration or frequency of this connection that is greater than a predetermined threshold;
- the total size of packets exchanged that is greater than a predetermined threshold or indeed other events.

FIG.1

EP 2 889 783 B1

$$\underline{\text{FIG.2}}$$

23

120

Initialisation de $C'_1$ et $C'_2$ — 121

Calcul de $D_i$ — 122

$M = \max \{D_i\}$, $L = \beta M$ — 123

124

$M > 0$ ? — Non

Oui

125

Transfert de $O_i$ tels que
$D_i \geq L$
Actualisation de M

126 — Calcul de $I_s$

## FIG.3

FIG.4

## RÉFÉRENCES CITÉES DANS LA DESCRIPTION

**Documents brevets cités dans la description**

• WO 2007068741 A1

**Littérature non-brevet citée dans la description**

• **KARLTON SEQUIERA et al.** *ADMIT : Anomaly-based Data Mining for Intrusions*